# EUROPÄISCHE PATENTSCHRIFT

(11) **EP 1 005 146 B1**
(45) Veröffentlichungstag und Bekanntmachung des Hinweises auf die Patenterteilung: **07.06.2006**
(21) Anmeldenummer: 99117841.9
(22) Anmeldetag: 10.09.1999
(51) Int. Cl.: H02M 1/14, H02M 1/15

(54) **Filter für Gleichspannungswandler**
Filter for DC converter
Filtre pour convertisseur courant continu

(30) Priorität: 27.11.1998 DE 19855439
(43) Veröffentlichungstag der Anmeldung: 31.05.2000
(73) Patentinhaber: EADS Astrium GmbH, 81663 München (DE)
(72) Erfinder: Müller, Wolfgang, 88693 Untersiggingen (DE)
(74) Vertreter: Ulrich, Thomas

(56) Entgegenhaltungen:
- GB-A- 904 482
- US-A- 4 594 648
- US-A- 5 668 708

## Beschreibung

Die Erfindung betrifft einen Gleichspannungswandler, der nach dem Schaltreglerprinzip arbeitet.

Derartige Gleichspannungswandler erzeugen prinzipbedingt unerwünschte hochfrequente Wechselströme, die dem aufgenommenen Gleichstrom überlagert sind. Um eine speisende Gleichspannungsquelle vor diesen Störungen zu schützen, muß ein Filter, bestehend aus Drosseln und Kondensatoren, zwischen speisende Quelle und Gleichspannungswandler geschaltet werden.
Durch die gute Dämpfung von mehrstufigen L-C Filtern können die Störströme auf akzeptable Werte für die speisende Quelle abgeschwächt werden.

Bei allen Anwendungen und speziell beim Einsatz in der Luft- und Raumfahrt sind die voluminösen Drosseln und Kondensatoren unerwünscht, da sie die Baugröße und vor allem das Gewicht der Stromversorgungssysteme in die Höhe treiben.

Die GB 904,482 betrifft einen elektrischen Filter mit Kondensatoren, welcher für Gleichstromkreise bereitgestellt wird. Die GB 904,482 beschreibt die Verwendung eines elektrischen Filters, wobei die Kondensatoren in Reihe mit einer Gleichspannungsquelle geschaltet sind und zwar so, dass die Gleichspannung, welche von den Kondensatoren aufgenommen wird, kleiner ist als die Spannung, welche auf den gesamten Filter angewendet wird.

Die US 5,668,708 betrifft einen Gleichstromversorger mit einem niedrigen Welligkeitslevel für den Ausgabestrom. Die US 5,668,708 beschreibt einen Stormversorger, welcher eine Endstufe mit einem Filter enthält. Der beschriebene Stromversorger enthält weiterhin in seiner Endstufe einen Welligkeitsausscheider, welcher ein Mittel zur Messung des Welligkeitsstroms enthält, der durch den Filter fließt. Ein Strom von gleicher Größe, aber unterschiedlicher Polarität wird in den Ausgabestrom des Stromversorgers eingebracht, um wirksam die Welligkeit zu neutralisieren.

Aufgabe der Erfindung ist es, das Volumen der Drosseln zu verringern, ohne die Dämpfungskennlinie des Filters soweit zu verändern, daß der wirksame Schutz gegen hochfrequente Störungen verlorengeht. Diese Aufgabe wird durch die Merkmale des Anspruchs 1 gelöst.

Diese Aufgabe wird erfindungsgemäss durch den Gegenstand der Patentansprüche gelöst.

Die Erfindung wird nachfolgend anhand von Figuren näher erläutert. Es zeigen:
- Fig. 1: einen zum Stand der Technik gehörenden L-C L-C filter,
- Fig. 2: einen L-C L-C Filter der ein Beispiel für die Lösung ist,
- Fig. 3: den Störstrom eines Gleichspannungswandlers,
- Fig. 4: das Frequenzspektrum des Wandler Störstromes,
- Fig. 5: eine technische Ausführung des erfindungsgemässen Filters,
- Fig. 6: die Dämpfungskurve (logaritmische Darstellung) des erfindungsgemässen Filters,
- Fig. 7: die Dämpfungskurve (lineare Darstellung) des erfindungsgemässen Filters,
- Fig. 8: eine technische Ausführung eines zum 'Stand der Technik' gehörenden Filters,
- Fig. 9: die Dämpfungskurve (logaritmische Darstellung) des Filters von Fig. 8 und
- Fig. 10: die Dämpfungskurve (lineare Darstellung) des zum 'Stand der Technik' gehörenden Filters.

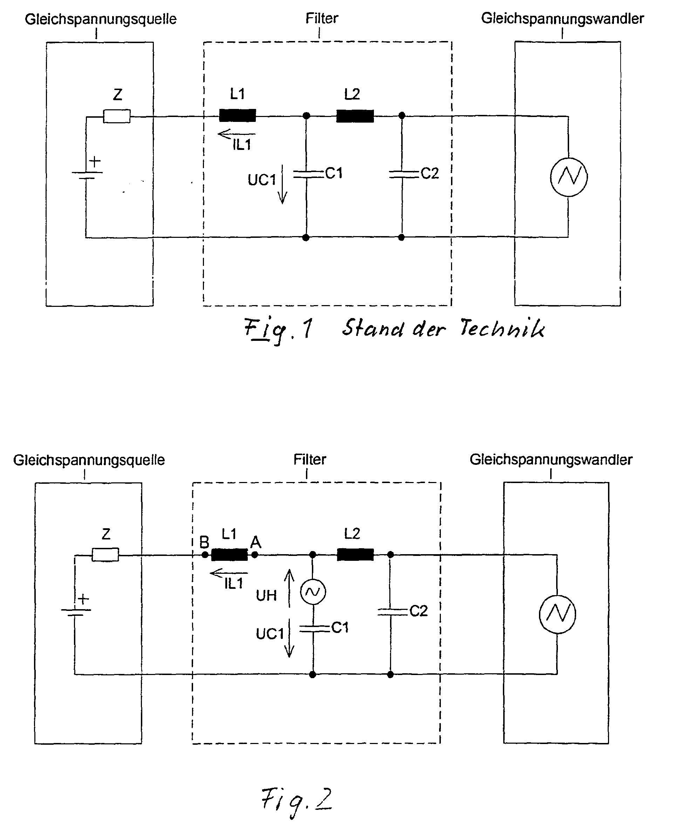

Fig. 1 zeigt die Standardkonfiguration eines herkömmlichen L-C L-C Filters. Der unerwünschte Störstrom I_{L1} wird von der Störspannung U_{C1} (Wechselspannungsanteil) durch die Drossel L1 getrieben. Der Gleichspannungsanteil von U_{C1} ist für die folgenden Betrachtungen nicht relevant und wird deshalb nicht weiter erwähnt. Reduziert man die Induktivitäten von L1 und L2, um Volumen und Masse einzusparen, so wird die Störspannung U_{C1} und somit auch der Störstrom I_{L1} größer und ist nicht mehr akzeptabel für die speisende Quelle.

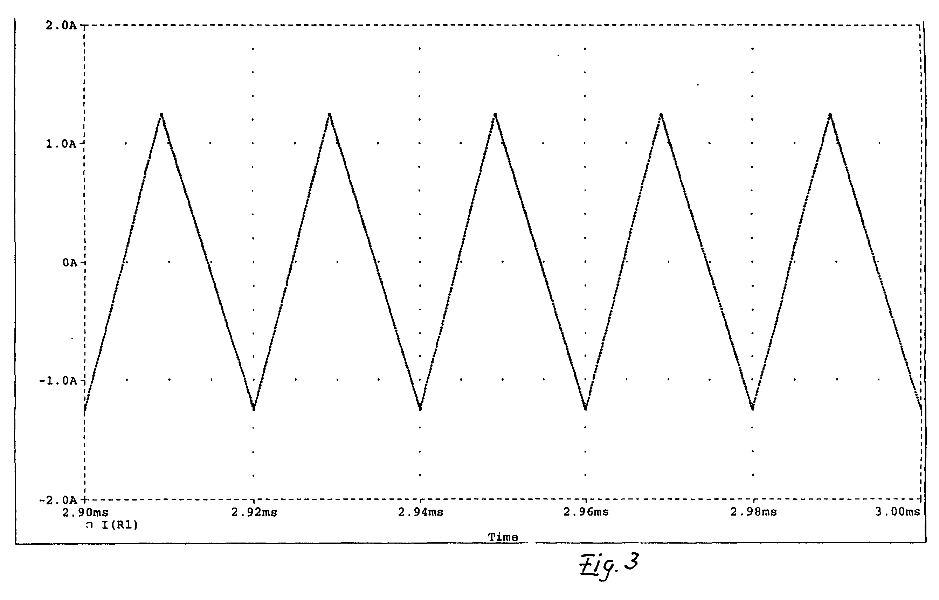

Ein Beispiel für die Lösung dieses Problems der das Verständnis der Erfindung erleichtert ist in Fig. 2 dargestellt. In Reihe zu C1 ist eine Hilfswechselspannungsquelle U_{H} geschaltet. U_{H} ist die gleiche Wechselspannungsamplitude wie die Störspannung U_{C1} bei 180° Phasendrehung.

Durch die Gegenphasigkeit heben sich die beiden Spannungen gegenseitig auf, und die stromtreibende Wechselspannungskomponente am Eingang von L1 (Anschluß A) wird zu null, und somit wird auch der Störstrom I_{L1} zu null.

Die komplette Auslöschung von I_{L1} funktioniert natürlich nur ideal unter der Annahme, daß der Gleichspannungswandler nur eine feste Störfrequenz ohne Oberwellen erzeugt.

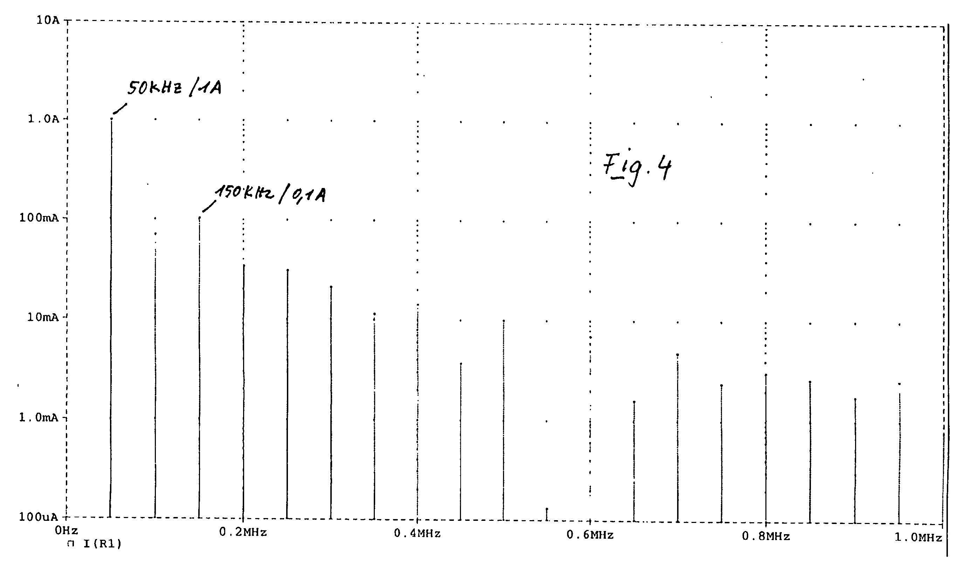

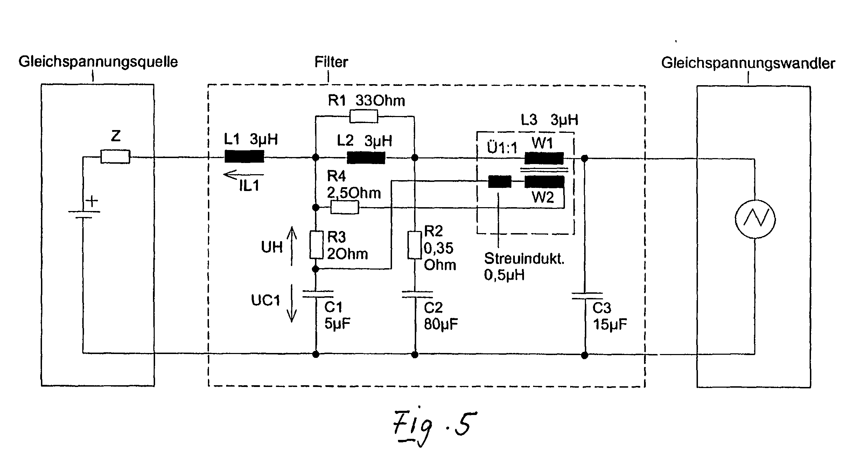

Der tatsächliche Störstrom eines Gleichspannungswandlers ist in Fig. 3 dargestellt. In Fig. 4 ist der dreieckförmige Strom mittels einer Fourier Analyse als Frequenzspektrum dargestellt. Die Grundwelle liegt bei 50 kHz/1A und die stärkste Oberwelle bei 150 kHz/0,1 A.

Mit dem Prinzip der gegenphasigen Einkopplung einer 50 kHz Hilfsspannung kann nur die Grundwelle ausgelöscht werden. Zur Dämpfung der Oberwellen ist nach wie vor ein mehrstufiges L-C Filter notwendig.

Da die Oberwellen nur noch kleine Amplituden bei hohen Frequenzen aufweisen, sind die benötigten Drosseln wesentlich kleiner als bei einem konventionellen Filter, das für die 50 kHz Grundwelle ausgelegt werden muß.

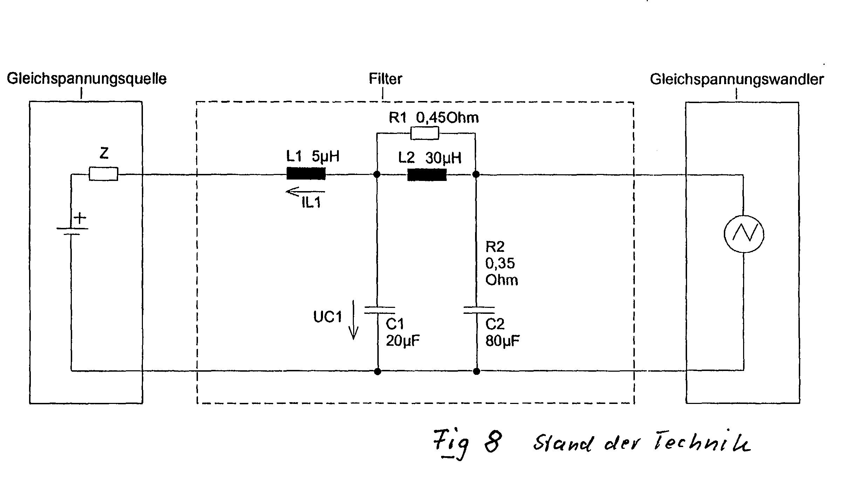

In Fig. 5 ist die technische Realisierung des neuen und - zum Verlgeich in Fig. 8 - des zum Stand der Technik gehörenden Filters dargestellt. Beide Filter sollen die 50 kHz Grundwelle des Gleichspannungswandlers von 1 Aeff auf 10 mAeff abdämpfen. Die Stromüberhöhung in den Filter Resonanzfrequenzen muß mit zusätzlichen Widerständen in Reihe oder parallel zu Kondensatoren und Drosseln auf maximal 1,4 Aeff begrenzt werden.

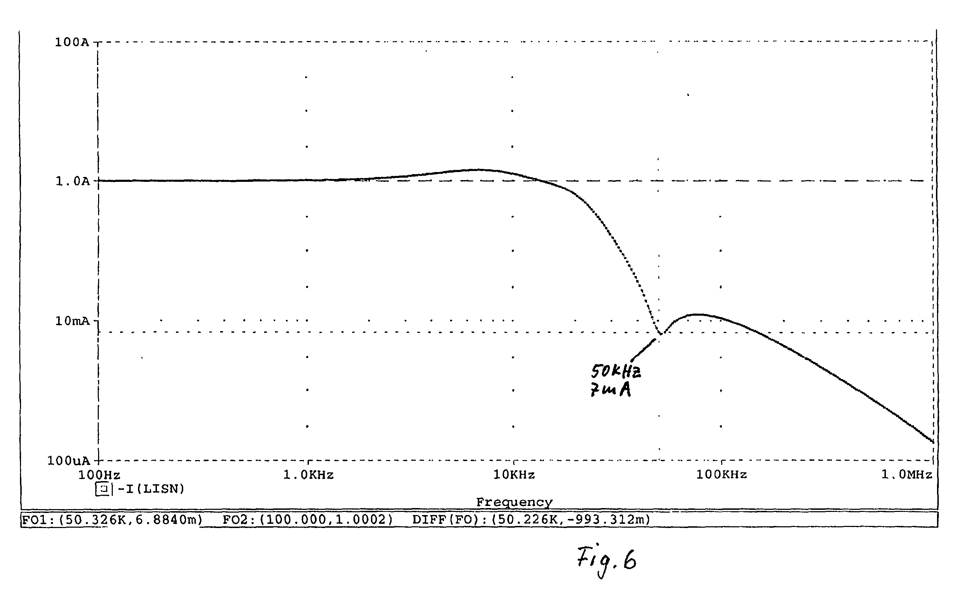

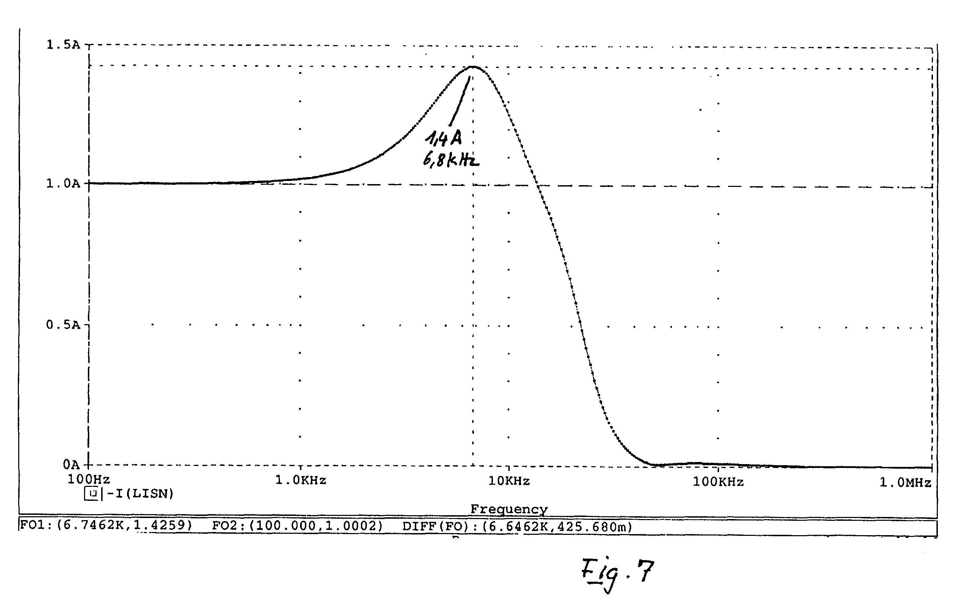

Das erfindungsgemässe Filter, im folgenden FRC (Feedback Ripple Compensation) genannt, besteht aus drei L-C Stufen. Die Hilfsspannungsquelle U_{H} wird von der Drossel L3 (Sekundärwicklung W2) erzeugt und über die Widerstände R4, R3 am Kondensator C1 eingekoppelt. Die notwendige Gegenphasigkeit von U_{C1} und U_{H} wird durch die Phasendrehung von L3, C2, L2, C1 erreicht, die bei der auszulöschenden Frequenz (50 kHz) auf 180° abgestimmt ist. Die Dämpfungskurve des FRC ist in den Fig. 6 und 7 aufgezeichnet. Bei der 50 kHz Grundwelle wird der 1 Aeff Strom auf 7 mA (Fig. 6) abgedämpft. Die Stromüberhöhung in der Resonanzfrequenz des FRC beträgt 1,4 Aeff (Fig. 7).

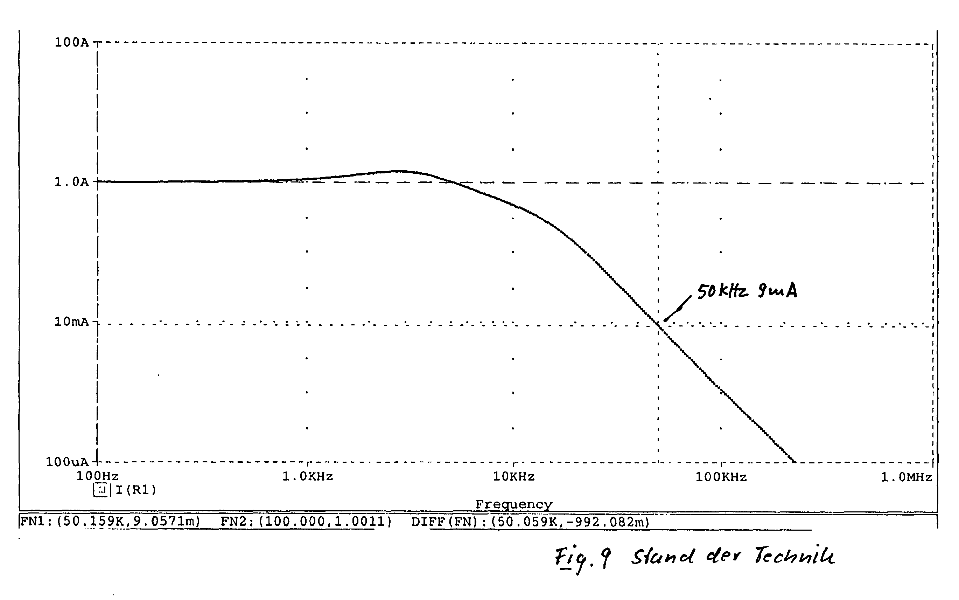

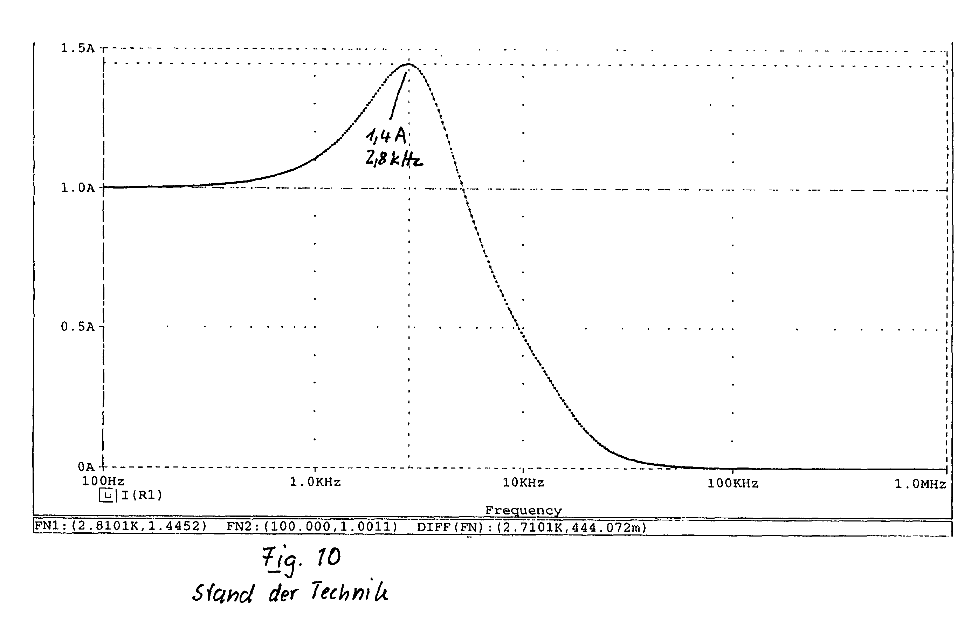

Das zum Stand der Technik gehörende Filter (Fig. 8) ist nach den Optimierungsrichtlinien von D. Venable, die im Aufsatz 'Minimizing Input Filter Requirements Power Supply Design' (PCIM May 1987) beschrieben sind, ausgelegt. Die 50 kHz Grundwelle wird von 1 Aeff auf 9 mAeff (Fig. 9) abgedämpft. Die Stromüberhöhung in der Resonanzfrequenz (Fig. 10) beträgt 1,4 Aeff.

In der folgenden Tabelle sind die Daten der beiden Filter gegenübergestellt.

| | **Filter** | **FRC-Filter** |
|---|---|---|
| | **Stand der Technik** | **gemäss der Erfindung** |
| Dämpfung (soll > 100) | 1 Aeff: 9 mAeff = 111 | 1A: 7 mA = 143 |
| Resonanzüberhöhung | 1,4 A | 1,4 A |
| Gesamtkapazität | C1 + C2 | C1 + C1 + C3 |
| | 100 µF | 100 µF |
| Gesamtinduktivität | L1 + L2 | L1 + L2 + L3 |
| | 35 µH | 9 µH |

Bei ca. gleicher Grundwellendämpfung und gleicher Kapazität benötigt das FRC-Filter nur 26 % der Induktivität des Venable Filters (9 µH zu 35 µH). Hiermit wird die gewünschte Masse- und Volumeneinsparung erreicht.

## Patentansprüche

1. Filter für Gleichspannungswandler, mit drei L-C-Stufen (L1-C1, L2-C2, L3-C3), wobei
der Filter zwischen eine speisende Quelle und den Gleichspannungswandler schaltbar ist, und in Reihe zu einem Kondensator (C1) der L-C-Stufe, die mit der speisenden Quelle direkt verbindbar ist (L1-C1), eine Hilfswechselspannungsquelle (U_{H}) geschaltet ist, die die gleiche Wechselspannungsamplitude wie eine durch den Kondensator hervorgerufene Störspannung (U_{C1}) bei 180°-Phasendrehung aufweist, und wobei
die Hilfswechselspannungsquelle (U_{H}) von einer Sekundärwicklung (W2) der Induktivität (L3) der L-C-Stufe, die mit dem Gleichspannungswandler direkt verbindbar ist (L3-C3), erzeugt wird;
die Sekundärwicklung (W2) der Induktivität (L3) mit einem hierzu seriell geschalteten Widerstand (R4) parallel mit einem in Serie zu dem Kondensator (C1) geschalteten Widerstand (R3) verbunden wird; und
das Verhältnis der Windungszahlen der Primärwicklung (W1) und der Sekundärwicklung (W2) gleich ist.

## Claims

1. Filter for a DC-DC voltage converter, having three L-C stages (L1-C1, L2-C2, L3-C3), wherein
the filter can be connected between a supplying source and the DC-DC voltage converter, an auxiliary AC voltage source (U_{H}) is connected in series with a capacitor (C1) of the L-C stage that can be linked directly to the supplying source (L1-C1), the auxiliary AC voltage source having the same AC voltage amplitude as an interference voltage (U_{C1}) caused by the capacitor in 180° phase rotation, and wherein
the auxiliary AC voltage source (U_{H}) is generated by a secondary winding (W2) of the inductor (L3) of the L-C stage that can be linked directly to the DC-DC voltage converter (L3-C3);
the secondary winding (W2) of the inductor (L3) is linked by a resistor (R4) connected in series with it to a resistor (R3) connected in series with the capacitor (C1); and
the ratio of the numbers of turns of the primary winding (W1) and the secondary winding (W2) is equal.

## Revendications

1. Filtre pour convertisseur courant continu, avec trois étages L-C (L1-C1, L2-C2, L3-C3), dans lequel
- le filtre peut être monté entre une source d'alimentation et le convertisseur courant continu, et une source auxiliaire de tension alternative (U_{H}) qui présente à une rotation de phase de 180° la même amplitude de tension alternative qu'une tension parasite (U_{c1}) provoquée par le condensateur, est montée en série par rapport à un condensateur (C1) de l'étage L-C, étage qui peut être relié directement à la source d'alimentation,
- la source auxiliaire de tension alternative (U_{H}) est produite par un enroulement secondaire (W2) de l'inductance (L3) de l'étage L-C qui peut être relié directement au convertisseur courant continu ;
- l'enroulement secondaire (W2) de l'inductance (L3), avec une résistance (R4) montée en parallèle avec celui-ci, est relié en parallèle avec une résistance (R3) montée en série par rapport au condensateur (C1) ; et
- le rapport de bobinage de l'enroulement primaire (W1) et de l'enroulement secondaire (W2) est identique.
